# EUROPÄISCHE PATENTSCHRIFT

(11) **EP 1 943 452 B1**
(45) Veröffentlichungstag und Bekanntmachung des Hinweises auf die Patenterteilung: **03.03.2010**
(21) Anmeldenummer: 06791711.2
(22) Anmeldetag: 26.09.2006
(51) Int. Cl.: F16N 25/02, F16N 27/00

(54) **KOLBENANORDNUNG, INSBESONDERE FÜR ZUMESSVENTILE**
PISTON ARRANGEMENT, IN PARTICULAR FOR METERING VALVES
AGENCEMENT DE PISTON, EN PARTICULIER POUR VANNES DE DOSAGE

(30) Priorität: 28.10.2005 DE 202005017065 U
(43) Veröffentlichungstag der Anmeldung: 16.07.2008
(73) Patentinhaber: Lincoln GmbH & Co. KG, 69190 Walldorf (DE)
(72) Erfinder: PALUNCIC, Zdravko, 67067 Ludwigshafen (DE); TRINKEL, Ralf, 67229 Gerolsheim (DE)
(74) Vertreter: KEIL & SCHAAFHAUSEN Patentanwälte
(86) Internationale Anmeldenummer: PCT/EP2006/008446
(87) Internationale Veröffentlichungsnummer: WO 2007/048460

(56) Entgegenhaltungen:
- EP-A- 1 471 301
- DE-A1- 2 009 921
- DE-A1- 2 010 730
- US-A- 3 715 013
- US-A- 3 958 725

## Beschreibung

Die Erfindung betrifft eine Kolbenanordnung, mit welcher beispielsweise ein Zumessventil, ein Durchflusssensor oder ein hydraulischer Motor verwirklichbar ist.

Aus US 3,958,725 ist ein Zumessventil bekannt, welches zwei Kolben enthaltende Zylinder aufweist. In dem stromaufwärts gelegenen Zylinder ist ein Kolben angeordnet. Ferner ist eine Zylinderstange vorgesehen, wobei die Abwärtsbewegung des Kolbens zu dem zweiten Kolben über die Kolbenstange übertragen wird, so dass sich auch der zweite Kolben entsprechend abwärts bewegt.

Für derartige Anwendungsfälle ist es häufig erforderlich, einerseits einen Dosierkolben, welcher zur Weiterleitung einer definierten Menge eines Fluids geeignet ist, und einen Umsteuerkolben bereitzustellen, welcher eine Hin- und Herbewegung des Dosierkolbens bewirkt. Insbesondere bei Verwendung einer derartigen Kolbenanordnung für Schmiereinrichtungen, welche teilweise bei sehr tiefen Temperaturen von beispielsweise von -40°C betrieben werden, soll eine Kolbenanordnung nicht nur einfach und möglichst platzsparend im Aufbau sein, sondern auch dauerhaft zuverlässig in ihrer Funktion sein.

Diese Anforderungen werden von einer erfindungsgemäßen Kolbenanordnung erfüllt, welche ein Gehäuse, in dem wenigstens ein zylindrischer Hohlraum gebildet ist, in welchem ein erster Kolben abgedichtet und verschiebbar gelagert ist und in dem zumindest bereichsweise ein zylindrischer Hohlraum ausgebildet ist und einen zweiten Kolben aufweist, der in dem zylindrischen Hohlraum des ersten Kolbens verschiebbar gelagert ist. Dabei soll in dem ersten Kolben ein Ventilsitz ausgebildet sein, gegen den der zweite Kolben mit einer Dichtfläche derart anlegbar ist, dass der zweite Kolben in dem ersten Kolben zwischen einer einen Strömungsdurchgang durch den ersten Kolben freigebenden und einer einen Strömungsdurchgang durch den ersten Kolbens sperrenden Stellung verschiebbar ist. Der erste Kolben wirkt somit als ein Dosierkolben, durch dessen Bewegung eine definierte Menge eines Fluids, insbesondere eines Schmierstoffs, gefördert oder zugemessen werden kann. Der zweite Kolben wirkt dagegen zusammen mit weiteren Bauelementen, wie beispielsweise einer Feder oder dergleichen, als ein Umsteuerkolben, der durch gezieltes Öffnen und/oder Schließen den auf den ersten Kolben wirkenden Druck verändern und damit eine Umkehr der Bewegungsrichtung des ersten Kolbens bewirken kann. Da die beiden Kolben ineinander angeordnet sind, ist es möglich, die Abmaße der erfindungsgemäßen Kolbenanordnung besonders kompakt zu halten. Weiter wird durch diesen einfachen Aufbau der Kolbenanordnung eine geringe Wartungsintensität und hohe Zuverlässigkeit der Kolbenanordnung erreicht.

Vorteilhafterweise ist dem zweiten Kolben ein elastisches Element, insbesondere ein Tellerfederpaket oder eine Druckfeder, derart zugeordnet, dass der zweite Kolben in Richtung seiner einen Strömungsdurchgang durch den ersten Kolben freigebenden Stellung beaufschlagt wird. Durch die Kraft der Feder oder dergleichen wird somit zunächst ein Durchströmen des Fluids durch den ersten Kolben ermöglicht, wobei der Fluidfluss beispielsweise durch ein Anschlagen des zweiten Kolbens an eine Anschlagfläche und/oder infolge des Fluiddrucks abgesperrt werden kann.

Eine leichtgängige Abdichtung zwischen dem ersten und dem zweiten Ventil, die auch eine gute Dichtwirkung erreicht, kann dadurch realisiert werden, dass der Ventilsitz und die Dichtfläche konisch gestaltet sind. Zudem lässt sich die Abdichtung dadurch verbessern, dass der Ventilsitz und/oder die Dichtfläche mit einem Dichtungselement, beispielsweise einem Dichtring, versehen sind.

Wenn der zweite Kolben zumindest bereichsweise eine zylindrische Außenfläche aufweist, deren Durchmesser etwa dem Innendurchmesser des zylindrischen Hohlraums des ersten Kolbens entspricht, können erfindungsgemäß auf der Außenfläche des zweiten Kolbens schraubenlinienförmige Nuten vorgesehen sein, so dass ein Fluid in diesen Nuten zwischen dem ersten und dem zweiten Kolben entlangströmen kann.

Nach einer bevorzugten Ausführungsform der Erfindung ist die Kolbenanordnung Bestandteil eines Zumessventils, bei welchem der erste Kolben als Injektorkolben in dem Gehäuse zwei Kammern definiert, welche durch Verschieben des zweiten Kolbens miteinander in Strömungsverbindung bringbar bzw. gegeneinander abdichtbar sind. Dabei ist die der ersten Kammer zugewandte Fläche des ersten und zweiten Kolbens kleiner als die der zweiten Kammer zugewandte Fläche des ersten Kolbens und ggf. mit diesem verbundener Elemente. Durch diese Flächendifferenz ist es möglich, die Bewegung der Kolbenanordnung zu steuern, indem zunächst Fluid durch die Kolbenanordnung hindurchströmt, so dass die Kolben dann aufgrund der größeren wirksamen Fläche in der zweiten Kammer entgegen der Strömungsrichtung des Fluids verschoben werden. Wenn dagegen der zweite Kolben den Durchgang in dem ersten Kolben abdichtet, werden die Kolben durch das Fluid in entgegengesetzter Richtung, d.h. in Strömungsrichtung des Fluids, bewegt. Die Umsteuerung zwischen den einzelnen Zumessphasen erfolgt somit durch die Bewegung der beiden Kolben. Durch den in dem Injektorkolben integrierten zweiten Kolben, der als Steuerventil wirkt, und durch die Flächendifferenz des Injektorkolbens ist es möglich, das gesamte Zumessventil sehr kompakt zu gestalten.

Bei einem erfindungsgemäßen Zumessventil (Injektor) bildet das Gehäuse vorzugsweise einen mit einer Verteilerleiste verbindbaren Injektorkörper, in welchem eine erste Öffnung zur Verbindung der ersten Kammer mit einer Zuleitung in der Verteilerleiste und eine insbesondere über ein Überströmventil verschließbare Auslassöffnung aufweist, welche wiederum mit einem in der Verteilerleiste vorgesehenen Anschluss verbunden ist. Wenn auf einer derartigen Verteilerleiste mehrere Zumessventile vorgesehen sind, befinden sich die Abgänge der jeweiligen Injektoren auf der Verteilerleiste. Falls eine Reparatur oder der Austausch eines Injektors nötig sein sollte, so müssen folglich lediglich Befestigungsschrauben oder dergleichen des betreffenden Injektors gelöst und entfernt werden. Die festen Verrohrungen an der Verteilerleiste sowie die Verteilerleiste selbst bleiben dabei montiert, so dass das System sehr wartungsfreundlich ist. Es können auch Verteilerleisten realisiert werden, auf denen mehrere Injektoren Platz finden. Hierdurch ändert sich lediglich das Abmaß der Verteilerleiste und die Anzahl der Anschlussbohrungen. Unbenutzte Injektorplätze können beispielsweise mit Blinddeckeln verschließbar sein.

In das Gehäuse kann auf der Seite der zweiten Kammer eine Injektorverschlussschraube eingeschraubt sein, in welche wiederum eine Regulierung, beispielsweise mit einer Schraube, eingeschraubt ist, wobei in der Regulierung ggf. ein mit dem ersten Kolben verbundener Anzeigestift verschiebbar geführt ist. Der Hub des Injektorkolbens und somit beispielsweise die Dosierfettmenge ist durch den Anschlag an der Injektorverschlussschraube begrenzt. Wird beispielsweise eine geringere Fettmenge benötigt, so kann ein Gewindestift in der Regulierung stufenlos so verstellt werden, dass ein mit dem ersten Kolben verbundener Anzeigestift mechanisch anschlägt und somit den Kolbenhub begrenzt. Hierdurch ist es theoretisch auch möglich, eine Nullförderung für das erfindungsgemäße Zumessventil einzustellen.

Es wird bevorzugt, wenn die zweite Kammer über eine mittels einer Verschlussschraube abdichtbare Öffnung mit der Umgebung des Gehäuses verbindbar ist. Durch derartige, beispielsweise seitliche Öffnungen können mehrere Injektoren untereinander verbunden werden, wodurch die Fördermenge pro Hub und Schmierstelle erhöht werden kann, ohne Injektoren mit größerer Maximalfördermenge zu verwenden.

Für die Funktionsweise des Injektorkolbens sollten die beiden Kammern gegeneinander abgedichtet sein, wobei der sich ergebende Zwischenraum durch eine Entlastungsleitung mit geringerem Druck als dem Druck in der Hauptleitung beaufschlagt wird. Dies kann dadurch erfolgen, dass die erste und die zweite Kammer über den ersten Kolben gegeneinander abgedichtet sind, wobei in diesem Dichtungsbereich des ersten Kolbens eine Öffnung in dem Gehäuse vorgesehen ist, die mit der Auslassöffnung oder mit der Umgebung des Gehäuses in Strömungsverbindung steht.

Nach einer weiteren bevorzugten Ausführungsform der Erfindung ist die Kolbenanordnung Bestandteil eines Durchflusssensors, wobei das Gehäuse zum Anschluss in einer Fluidleitung eine Einlassöffnung und eine Auslassöffnung, zwischen denen der erste Kolben angeordnet ist, aufweist. Zwischen der Einlassöffnung und dem ersten Kolben ist eine erste Kammer und zwischen der Auslassöffnung und dem ersten Kolben eine zweite Kammer gebildet, die in Abhängigkeit der Position des zweiten Kolbens in dem ersten Kolben miteinander in Verbindung stehen oder voneinander getrennt sind. Durch den zweiten Kolben, welcher ein Steuerventil bildet, kann zusammen mit einer Druckfeder der als Sensorkolben dienende erste Kolben bei Druckbeaufschlagung der Einlassöffnung in eine oszillierende Bewegung versetzt werden. Diese kann über einen Sensor erfasst und an eine Steuerung gesendet und ausgewertet werden. Der erfindungsgemäße Durchflusssensor ist dabei besonders platzsparend und zuverlässig ausgestaltet.

Bei einem Durchflusssensor ist dem zweiten Kolben vorzugsweise eine sich an dem ersten Kolben oder einer mit diesem verbundenen Komponente abstützende Druckfeder zugeordnet, die den zweiten Kolben in Richtung seiner die beiden Kammern verbindenden Stellung beaufschlagt. Dies erleichtert beispielsweise zusammen mit der Fluidkraft das Öffnen des Durchgangs zwischen dem ersten und zweiten Kolben.

Weiter ist erfindungsgemäß bei einem derartigen Durchflusssensor zwischen der Auslassöffnung und dem ersten Kolben eine den ersten Kolben in Richtung zu der Einlassöffnung beaufschlagende weitere Druckfeder vorgesehen. Diese Druckfeder ist derart ausgelegt, dass der erste Kolben bei geschlossenem zweiten Kolben durch den Fluiddruck gegen die Kraft dieser weiteren Druckfeder in Richtung zu der Auslassöffnung verschiebbar ist. Stößt dann der zweite Kolben mit einem Anschlag gegen eine entsprechende Fläche der Auslassöffnung an, so wird der zweite Kolben auch durch die Kraft der auf diesen wirkenden Druckfeder geöffnet, so dass Fluid von der Einlassöffnung durch die Kolbenanordnung zu der Auslassöffnung strömen kann. In diesem Zustand drückt die weitere Druckfeder den ersten Kolben wieder zurück in Richtung zu der Einlassöffnung, wobei sich die Durchgangsöffnung in der Kolbenanordnung hierbei wieder schließt. Es entsteht somit eine detektierbare oszillierende Bewegung der Kolbenanordnung.

Die Messung einer Durchflussmenge kann dadurch mit einfachen Mitteln realisiert werden, dass an oder in dem ersten Kolben beispielsweise ein Magnet, insbesondere ein Ringmagnet, vorgesehen ist, wobei an oder in dem Gehäuse ein Sensor, insbesondere ein Hallsensor, zum Erfassen der Position und/oder der Bewegung des Magnets oder dergleichen vorgesehen ist. Auf diese Weise ist es möglich zu detektieren, ob ein Fluid durch den Durchflusssensor strömt. Bei bekanntem Volumen, welches bei einem Hub der erfindungsgemäßen Kolbenanordnung durch den Durchflusssensor strömt, lässt sich auch die Strömungsmenge ermitteln. Der Hallsensor oder dergleichen kann auf einer Platine vorgesehen sein, die zusätzlich Funktions-LEDs und Anschlusskabel trägt. Vorzugsweise ist die Platine vergossen und auf dem Gehäuse des Durchflusssensors befestigt.

Nach einer weiteren Ausführungsform der Erfindung ist die Kolbenanordnung Bestandteil eines hydraulischen Motors. Hierzu kann der erste Kolben wie bei einem Zumessventil (Injektor) als Differentialkolben mit einer Flächendifferenz ausgebildet und nach außen verlängert sein. Zudem ist es möglich den Kolben wie beim Durchflusssensor mit einer Rückstellfeder auszubilden, jedoch ohne Magnet. Mit dieser Verlängerung nach außen kann beispielsweise ein Pumpenelement oder dergleichen angesteuert werden.

Weitere Ziele, Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: eine Draufsicht auf drei erfindungsgemäße Zumessventile, die auf einer gemeinsamen Verteilerleiste angeordnet sind,
- Fig. 2: ein Zumessventil nach Fig. 1 mit Verteilerleiste in Seitenansicht,
- Fig. 3: einen Schnitt durch ein Zumessventil und die Verteilerleiste entlang der Linie A-A in Fig. 1,
- Fig. 4: einen Schnitt durch ein Zumessventil und die Verteilerleiste entlang der Linie B-B in Fig. 1,
- Fig. 5: einen erfindungsgemäßen Durchflusssensor in Schnittansicht,
- Fig. 6: eine Draufsicht auf den Durchflusssensor nach Fig. 5 und
- Fig. 7: einen Schnitt durch ein Überströmventil.

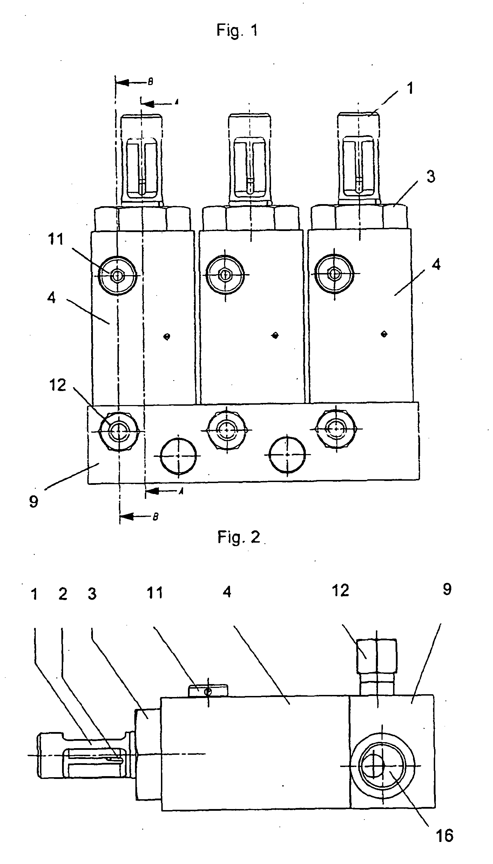

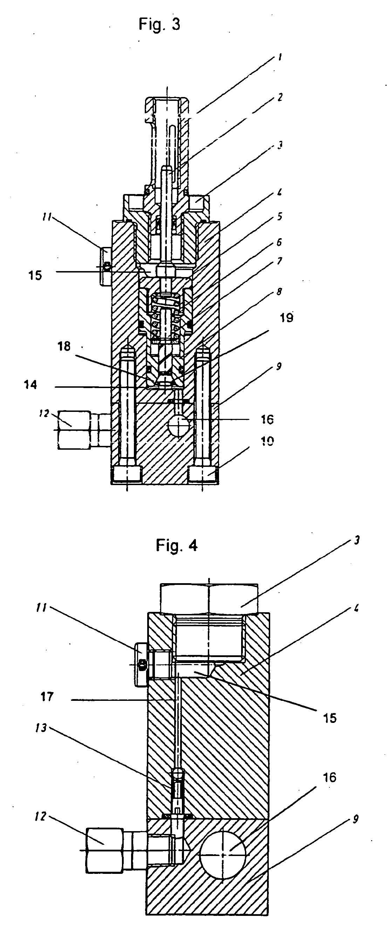

Die in den Fig. 1 bis 4 dargestellten Zumessventile bzw. Injektoren bestehen jeweils aus einem Injektorkörper bzw. Gehäuse 4, wobei in der gezeigten Ausführungsform drei Injektorkörper 4 auf einer gemeinsamen Verteilerleiste 9 mit jeweils zwei Zylinderkopfschrauben 10 befestigt sind. Die Abdichtung zwischen den Injektorkörpern 4 und der Verteilerleiste 9 erfolgt mittels O-Ringen, wie aus der Schnittansicht der Fig. 3 und 4 ersichtlich ist. Die Montage der kompletten Verteilereinheit, die aus der Verteilerleiste und den Injektoren besteht, kann beispielsweise über zwei in der Verteilerleiste 9 befindliche Befestigungsbohrungen erfolgen.

Die Zufuhr von Schmierstoff in die Verteilereinheit erfolgt durch eine Zuleitung 16, die als eine Durchgangsbohrung in der Verteilerleiste 9 mit seitlichen Anschlussgewinden für Einschraubverschraubungen zum Anschluss der Pumpenleitung bzw. weiterer Verteilerleisten ausgebildet ist. Zudem sind die Auslässe der einzelnen Injektoren in die Verteilerleiste 9 zurückgeführt und können über gerade (oder abgewinkelte) Einschraubverschraubungen 12 an Schmierleitungen angeschlossen werden, die beispielsweise zu einer Lagerstelle führen.

Jeder einzelne Injektor (Zumessventil) besteht aus dem Injektorkörper 4 (Gehäuse), in dem sich ein erster Kolben als Injektorkolben 8 mit Anbauteilen befindet. Eine Injektorverschlussschraube 3 verschließt den Injektor auf der in den Fig. 1 und 3 oberen Seite und stellt eine Hubbegrenzung für die Injektorkolbenbaugruppe dar. In die Injektorverschlussschraube 3 ist eine Regulierung 1 eingeschraubt, mittels der die Dosiermenge beeinflusst werden kann. Zur optischen Kontrolle der Injektorfunktion ist in der Regulierung ein Sichtfenster ausgebildet, in welchem ein Anzeigestift 2 zu sehen ist, der mit dem ersten Kolben 8 verbunden ist und sich mit diesem während eines Schmierzyklus auf und ab bewegt.

Der Injektorkolben 8 definiert in dem Injektorkörper 4 eine erste Kammer 14, welche der Verteilerleiste 9 zugewandt ist, und eine von dieser angewandte zweite Kammer 15. Dabei steht die erste Kammer 14 mit der Zuleitung 16 in Strömungsverbindung. Die zweite Kammer 15 ist mit einem seitlichen Ausgang versehen, welcher in der dargestellten Ausführungsform mit einer Verschlussschraube 11 verschlossen ist. Wie aus der Darstellung der Fig. 4 ersichtlich ist, zweigt von der zweiten Kammer 15 weiter eine Auslassbohrung 17 ab, durch welche ein Schmierstoff zu der Einschraubverschraubung 12 in der Verteilerleiste 9 geleitet wird. In der Anschlussbohrung 17 ist in der dargestellten Ausführungsform ein Überströmventil 13 vorgesehen, welches aus einer Kugel, einer Feder und einer Federhalterung besteht.

In dem Injektorkolben 8 ist ein zweiter Kolben 7 verschiebbar geführt, der ein Steuerventil bildet. Das in Fig. 3 untere Ende des Injektorkolbens 8 ist mit einem konischen Ventilsitz 18 versehen, während das untere Ende des zweiten Kolbens 7 eine entsprechende konische Dichtfläche 19 mit einem Dichtring aufweist. Ein zylindrischer Außenflächenbereich des zweiten Kolbens 7 ist mit einer schraubenlinienförmig angeordneten Nut versehen, so dass zwischen der Außenfläche des zweiten Kolbens 7 und der ebenfalls zylindrischen Innenfläche des ersten Kolbens 8 ein Fluid strömen kann, wenn die Dichtfläche 19 von dem Ventilsitz 18 abgehoben wird.

Zwischen einer den ersten Kolben 8 zu der zweiten Kammer 15 hin verschließenden Injektorkolbenschraube 5 und dem zweiten Kolben 7 ist eine Schraubendruckfeder 6 gespannt, welche den zweiten Kolben 7 in seine geöffnete Stellung beaufschlagt. Statt der Schraubendruckfeder kann auch ein Tellerfederpaket vorgesehen sein. Wie aus der Darstellung der Fig. 3 ersichtlich ist, ist die gemeinsame Fläche des ersten Kolbens 8 und des zweiten Kolbens 7, welche der ersten Kammer 14 zugewandt ist, kleiner als die der zweiten Kammer 15 zugewandte Fläche der Injektorkolbenschraube 5 des ersten Kolbens 8.

Im Folgenden wird die Funktionsweise des erfindungsgemäßen Zumessventils näher erläutert: Die Ladephase beginnt, wenn im drucklosen Zustand das Steuerventil 7 (zweiter Kolben) durch die Federkraft der Schraubendruckfeder 6 im Injektorkolben 8 (erster Kolben) geöffnet ist. Wird nun mit einer Fettpumpe beispielsweise Fett als Schmierstoff durch die Zuleitung 16 in die erste Kammer 14 des Injektors gepumpt, so strömt das Fett an dem geöffneten Steuerventil 7 vorbei durch die schraubenlinienförmige Nut und gelangt so durch den Injektorkolben 8 hindurch in die zweite Kammer 15. Aus dieser strömt das Fett weiter in die Auslassbohrung 17 bis vor das zunächst geschlossene Überströmventil 13. Bei weiterer Fettförderung in den Injektor steigt der innere Druck, wobei sich durch die Flächendifferenzen am Injektorkolben 8 dieser infolge der resultierenden Kraft in Fig. 3 nach unten verschiebt. In dieser Phase wird die zweite Kammer 15 mit Fett befüllt. Hierbei schließt sich bei der Abwärtsbewegung des Injektorkolbens 8 das Steuerventil 7 durch mechanischen Anschlag an dem Bohrungsgrund in dem Injektorkörper 4 (Gehäuse). Die Darstellung der Fig. 3 zeigt dabei das Ende der Ladephase, bei welcher das Steuerventil 7 bereits wieder geschlossen ist.

In der sich daran anschließenden Dosierphase erhöht sich in der ersten Kammer 14 und im Verhältnis dazu auch in der zweiten Kammer 15 der Druck, wenn die Fettpumpe weiterhin Fett oder dergleichen in den Injektor fördert. Wird dabei in der zweiten Kammer 14 und somit auch in der Auslassbohrung 17 der an dem Überströmventil 13 eingestellte Druck überschritten, so öffnet dieses und der Injektorkolben 8 kann durch den Druck in der ersten Kammer 14 in Fig. 3 nach oben gedrückt werden. Das in der zweiten Kammer 15 befindliche Fett wird hierdurch durch die Auslassbohrung 17 am Überströmventil 13 vorbei zu einer Lagerstelle oder dergleichen gefördert.

Durch den Anschlag an der Injektorverschlussschraube 3 ist der Hub des Injektorkolbens 8 und damit die dosierte Schmierstoffmenge begrenzt. Wird eine geringere Fettmenge benötigt, so kann eine Einstellschraube in der Regulierung 1 stufenlos so verstellt werden, dass der Anzeigestift 2, welcher mit dem Injektorkolben 8 verbunden ist, mechanisch anschlägt und dabei den Kolbenhub begrenzt.

An diese Dosierphase schließt sich die Entlastungsphase an, um einen neuen Schmierzyklus erneut mit einer Ladephase zu starten. Hierzu muss der Druck in der Zuleitung 16 unter den dimensionierten Entlastungsdruck von vorzugsweise etwa 90 bar abfallen. Ist der Entlastungsdruck unterschritten, wird das Steuerventil 7 durch die Kraft der Druckfeder 6 geöffnet. Der anstehende Druck aus der Zuleitung 16 in der ersten Kammer 14 entspannt sich sofort in die zweite Kammer 15 und bewirkt eine kleine Abwärtsbewegung des Injektorkolbens 8. Die Entlastungsgeschwindigkeit der Hauptleitung wird durch den Kolbenhub beim Entlasten erhöht, da bei diesem Kolbenhub der Zuleitung 16 Fett entnommen wird. Durch diese Fettentnahme sinkt der Restdruck in der Hauptleitung schlagartig ab, was insbesondere bei dem Einsatz eines Injektors bei sehr tiefen Temperaturen von beispielsweise etwa -40°C sehr wichtig ist. Nur wenn der Entlastungsdruck unterschritten wird, kann ein weiterer Schmierzyklus stattfinden. Je schneller dieser Entlastungsdruck erreicht wird, umso eher kann ein neuer Schmierzyklus erfolgen.

Um die mögliche Maximalfördermenge des Injektors zu erhöhen, müssen lediglich die Länge des Injektorkörpers und die des Injektorkolbens vergrößert werden. Es ist folglich keine Neuauslegung der verwendeten Federn notwendig. Alternativ hierzu ist es auch möglich, über die mit den Verschlussschrauben 11 versehenen seitlichen Ausgänge mehrere Injektoren untereinander zu verbinden. Hierdurch kann die Fördermenge pro Hub und Schmierstelle erhöht werden, ohne Injektoren mit größerer Maximalfördermenge verwenden zu müssen.

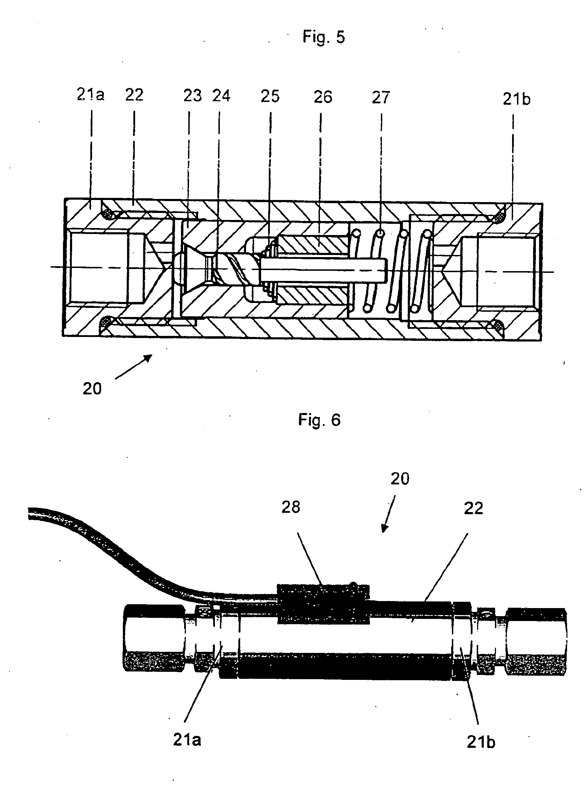

Unter Bezugnahme auf die Fig. 5 und 6 wird nun der Aufbau und die Funktion eines erfindungsgemäßen Durchflusssensors 20 beschrieben. Der Durchflusssensor 20 weist eine in eine Fluidleitung integrierbare Einlassöffnung 21a und eine ebenfalls in eine Fluidleitung integrierbare Auslassöffnung 21 b auf. Die Einlassöffnung 21a und die Auslassöffnung 21b verschließen ein rohrartiges Sensorgehäuse 22 und sind gegenüber diesem mittels O-Ringen abgedichtet. Die Einlassöffnung 21a und die Auslassöffnung 21b sind mit einem Innengewinde versehen, so dass eine gerade Einschraubverschraubung in diese montiert werden kann. In dem Sensorgehäuse 22 ist ein erster Kolben 23 (Sensorkolben) verschiebbar geführt, so dass durch den Sensorkolben 23 zwischen der Einlassöffnung 21 a und der Auslassöffnung 21 b zwei Kammern in dem Gehäuse 22 definiert werden.

In dem Sensorkolben 23 ist ein zweiter Kolben 24 (Sensorsteuerventil) verschiebbar geführt, wobei in dem Sensorkolben 23 und dem Sensorsteuerventil 24 wie oben beschrieben ein konischer Ventilsitz und eine entsprechende Dichtfläche ausgebildet sind. Weiter ist die zylindrische Außenfläche des zweiten Kolbens 24 mit einer schraubenlinienförmig verlaufenden Nut versehen, so dass ein Fluid durch diese Nut zwischen dem ersten und zweiten Kolben hindurchströmen kann.

Der zweite Kolben 24 wird durch eine Kegeldruckfeder 25, welche sich an einem in dem Sensorkolben 23 aufgenommenen Ringmagnet 26 abstützt, in Richtung seiner in Fig. 5 linken, geöffnete Stellung beaufschlagt. Weiter ist eine Druckfeder 27 zwischen dem Sensorkolben 23 und der Auslassöffnung 21 b vorgesehen, welche den Sensorkolben 23 ebenfalls in Fig. 5 nach links beaufschlagt. Auf dem Sensorgehäuse 22 befindet sich eine vergossene Platine mit einem Hallsensor 28, Funktions-LEDs und einem Anschlusskabel.

Der Durchflusssensor kann beispielsweise in die Fettzuleitung einer Schmierstelle eingebaut sein, um die Fettversorgung zu überwachen. In Ruhestellung drückt die Feder 27 die Sensorkolbenbaugruppe in Fig. 5 nach links in Richtung der Einlassöffnung 21a. bis das Sensorsteuerventil 24 durch mechanischen Anschlag an der Einlassöffnung 21a geschlossen ist.

Strömt nun Fett oder ein Fluid durch die Einiassöffnung 21a in die in der Figur linke Kammer, so baut sich zunächst in dieser ein Druck auf. Steigt der Druck in dieser Kammer so hoch an, dass die auf den Sensorkolben 23 wirkende resultierende Kraft höher ist als die auf der Auslassseite wirkende Kraft, so verschiebt sich die Sensorkolbenbaugruppe in der Fig. 5 nach rechts in Richtung der Auslassöffnung 21b. Nach einem definierten Kolbenweg schlägt das Sensorsteuerventil 24 (zweiter Kolben) an eine Anschlagfläche der Auslassöffnung 21b an. Hierdurch wird das Sensorsteuerventil 24 durch Abheben der Dichtfläche von dem Ventilsitz geöffnet, wodurch die Einlassöffnung 21a mit der Auslassöffnung 21 b in Strömungsverbindung stehen.

Fett oder dergleichen strömt in dieser Position von der Einlassöffnung 21 a durch die Kolben zu der Auslassöffnung 21b, so dass sich die Druckdifferenz in den Kammern abbaut. Die Kraft der Druckfeder 27 bewirkt nun eine Rückstellung der Kolbenanordnung in die in Fig. 5 dargestellte Position. Hierbei wird die Dichtfläche des Sensorsteuerventils 24 wieder gegen den Ventilsitz des Sensorkolbens 23 gepresst, wodurch der Strömungsdurchgang zwischen der Einlassöffnung 21 a und der Auslassöffnung 21 b gesperrt wird.

Eine Strömung durch den erfindungsgemäßen Durchflusssensor bewirkt folglich eine oszillierende Bewegung des Sensorkolbens 23 und des mit diesem verbundenen Ringmagnets 26 in dem Sensorgehäuse 22. Die Bewegung des Magnetfelds kann durch den Hallsensor 28 erfasst und zur Auswertung an eine Steuerung weitergeleitet werden. Das Schalten des Hallsensors 28 kann dabei optisch mittels einer LED angezeigt werden. Eine weitere LED kann Auskunft über den Betriebszustand des Durchflusssensors geben. Auf diese Weise ist es möglich, mit dem erfassten Signal die Laufzeiten oder das Fördervolumen pro Zeiteinheit durch eine Fettzuleitung zu ermitteln.

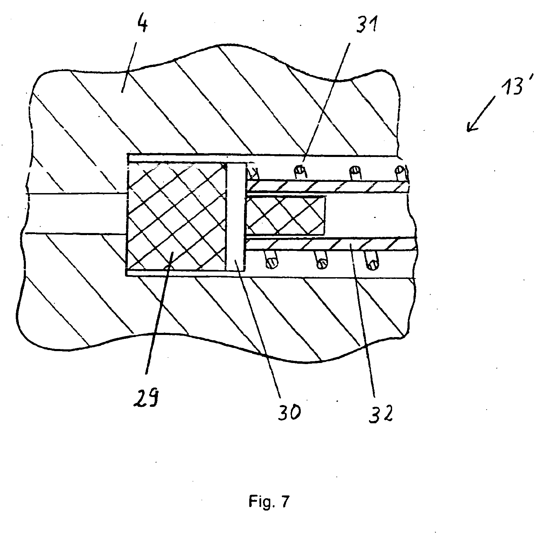

In Fig. 7 ist als eine Alternative zu dem in Fig. 4 dargestellten Überströmventil 13 mit Kugel und Feder ein Überströmventil 13' mit einem Dichtungsteil 29 aus bspw. PUR mit einer Stützscheibe 30 und einer Feder 31 gezeigt. Dabei dient eine Spannhülse 32 zur Hubbegrenzung und schützt die Feder 31 vor Überlastung, da die Blocklänge der Feder 31 nicht erreicht wird.

### Bezugszeichenliste

- 1: Regulierung (Regulierschraube)
- 2: Anzeigestift
- 3: Injektorverschlussschraube
- 4: Gehäuse (Injektorkörper)
- 5: Injektorkolbenschrauben
- 6: Schraubendruckfeder
- 7: zweiter Kolben (Steuerventil)
- 8: erster Kolben (Injektorkolben)
- 9: Verteilerleiste
- 10: Zylinderkopfschraube
- 11: Verschlussschraube
- 12: Einschraubverschraubung
- 13, 13': Überströmventil
- 14: erste Kammer
- 15: zweite Kammer
- 16: Zuleitung
- 17: Auslassbohrung
- 18: Ventilsitz
- 19: Dichtfläche
- 20: Durchflusssensor
- 21a: Einlassöffnung
- 21 b: Auslassöffnung
- 22: Sensorgehäuse
- 23: erster Kolben (Sensorkolben)
- 24: zweiter Kolben (Sensorsteuerventil)
- 25: Kegeldruckfeder
- 26: Ringmagnet
- 27: Druckfeder
- 28: Hallsensor
- 29: Dichtungsteil
- 30: Stützscheibe
- 31: Druckfeder
- 32: Spannhülse

## Patentansprüche

1. Kolbenanordnung, insbesondere für Zumessventile, Durchflusssensoren oder hydraulische Motoren, mit einem Gehäuse (4, 22), in welchem wenigstens ein zylindrischer Hohlraum gebildet ist, in welchem ein erster Kolben (8, 23) abgedichtet und verschiebbar gelagert ist, der zumindest bereichsweise einen zylindrischen Hohlraum aufweist, und mit einem zweiten Kolben (7, 24), der in dem zylindrischen Hohlraum des ersten Kolbens (8, 23) verschiebbar gelagert ist, wobei in dem ersten Kolben (8, 23) ein Ventilsitz ausgebildet ist, gegen den der zweite Kolben (7, 24) mit einer Dichtfläche derart anlegbar ist, dass der zweite Kolben (7, 24) in dem ersten Kolben (8, 23) zwischen einer einen Strömungsdurchgang durch den ersten Kolben (8, 23) freigebenden und einer einen Strömungsdurchgang durch den ersten Kolben (8, 23) sperrenden Stellung verschiebbar ist, **dadurch gekennzeichnet, dass** dem zweiten Kolben (7, 24) ein elastisches Element, insbesondere eine Druckfeder oder ein Tellerfederpaket (6, 25), derart zugeordnet ist, dass der zweite Kolben (7, 24) in seine einen Strömungsdurchgang durch den ersten Kolben (8, 23) freigebende Stellung beaufschlagt wird.

2. Kolbenanordnung nach Anspruch 1, **dadurch gekennzeichnet, dass** der Ventilsitz und die Dichtfläche konisch gestaltet sind.

3. Kolbenanordnung nach einem der Ansprüche 1 bis 2, **dadurch gekennzeichnet, dass** der zweite Kolben (7, 24) zumindest bereichsweise eine zylindrische Außenfläche aufweist, deren Durchmesser etwa dem Innendurchmesser des zylindrischen Hohlraums des ersten Kolbens (8, 23) entspricht und auf der schraubenlinienförmige Nuten vorgesehen sind.

4. Zumessventil mit einer Kolbenanordnung nach einem der Ansprüche 1 bis 3, **dadurch gekennzeichnet, dass** der erste Kolben (8) als Injektorkolben in dem Gehäuse (4) zwei Kammern (14, 15) definiert welche durch Verschieben des zweiten Kolbens (7) miteinander in Strömungsverbindung bringbar sind, wobei die der ersten Kammer (14) zugewandte Fläche des ersten und zweiten Kolbens (7, 8) kleiner als die der zweiten Kammer (15) zugewandte Fläche des ersten Kolbens (8) und ggf. mit diesem verbundener Elemente (2, 5) ist.

5. Zumessventil nach Anspruch 4, **dadurch gekennzeichnet, dass** das Gehäuse (4) einen mit einer Verteilerleiste (9) verbindbaren Injektorkörper bildet, in welchem eine erste Öffnung zur Verbindung der ersten Kammer (14) mit einer Zuleitung in der Verteilerleiste (9) und eine insbesondere durch ein Überströmventil (13) verschließbare Auslassöffnung aufweist, welche wiederum mit einem in der Verteilerleiste (9) vorgesehenen Anschluss (12) verbunden ist.

6. Zumessventil nach Anspruch 4 oder 5, **dadurch gekennzeichnet, dass** in das Gehäuse (4) auf der Seite der zweiten Kammer (15) eine Injektorverschlussschraube (3) eingeschraubt ist, in welche eine Regulierschraube (1) eingeschraubt ist, in der ggf. ein mit dem ersten Kolben (8) verbundener Anzeigestift (2) verschiebbar geführt ist.

7. Zumessventil nach einem der Ansprüche 4 bis 6, **dadurch gekennzeichnet, dass** die zweite Kammer (15) über eine mittels einer Verschlussschraube (11) abdichtbare Öffnung mit der Umgebung des Gehäuses (4) verbindbar ist.

8. Zumessventil nach einem der Ansprüche 4 bis 7, **dadurch gekennzeichnet, dass** die erste und die zweite Kammer (14, 15) über den ersten Kolben (8) gegeneinander abgedichtet sind, und dass in dem Dichtungsbereich des ersten Kolbens (8) eine Öffnung in dem Gehäuse (4) vorgesehen ist, die mit der Auslassöffnung oder mit der Umgebung des Gehäuses (4) in Strömungsverbindung steht.

9. Durchflusssensor mit einer Kolbenanordnung nach einem der Ansprüche 1 bis 3, **dadurch gekennzeichnet, dass** das Gehäuse (22) zum Anschluss in einer Fluidleitung eine Einlassöffnung (21a) und eine Auslassöffnung (21b), zwischen denen der erste Kolben (23) angeordnet ist, aufweist, wobei zwischen der Einlassöffnung (21a) und dem ersten Kolben (23) eine erste Kammer und zwischen der Auslassöffnung (21 b) und dem ersten Kolben (23) eine zweite Kammer gebildet ist, die in Abhängigkeit der Position des zweiten Kolbens (24) in dem ersten Kolben (23) miteinander in Verbindung stehen oder voneinander getrennt sind.

10. Durchflusssensor nach Anspruch 9, **dadurch gekennzeichnet, dass** dem zweiten Kolben (24) eine sich an dem ersten Kolben (23) oder einer mit diesem verbundenen Komponente (26) abstützende Druckfeder (25) zugeordnet ist, die den zweiten Kolben (24) in Richtung seiner die beiden Kammern verbindende Stellung beaufschlagt.

11. Durchflusssensor nach Anspruch 9 oder 10, **dadurch gekennzeichnet, dass** zwischen der Auslassöffnung (21 b) und dem ersten Kolben (23) eine den ersten Kolben (23) in Richtung zu der Einlassöffnung (21a) beaufschlagende weitere Druckfeder (27) vorgesehen ist.

12. Durchflusssensor nach einem der Ansprüche 9 bis 11, **dadurch gekennzeichnet, dass** an oder in dem ersten Kolben (23) ein Magnet, insbesondere ein Ringmagnet (26) vorgesehen ist, und dass an oder in dem Gehäuse (22) ein Sensor (28), insbesondere ein Hallsensor, zum Erfassen der Position und/oder Bewegung des Magnets (26) vorgesehen ist.

13. Hydraulischer Motor mit einer Kolbenanordnung nach einem der Ansprüche 1 bis 3, wobei das Gehäuse (22) zum Anschluss in einer Fluidleitung eine Einlassoffnung (21a) und eine Auslassöffnung (21 b), zwischen denen der erste Kolben (23) angeordnet ist, aufweist, wobei zwischen der Einlaßöffnung (21a) und dem ersten Kolben (23) eine erste Kammer und zwischen der Auslassöffnung (21 b) und dem ersten Kolben (23) eine zweite Kammer gebildet ist, die in Abhängigkeit der Position des zweiten Kolbens (24) in dem ersten Kolben (23) miteinander in Verbindung stehen oder voneinander getrennt sind, wobei dem zweiten Kolben (24) eine sich an dem ersten Kolben (23) oder einer mit diesem verbundenen Komponente (26) abstützende Druckfeder (25) zugeordnet ist, die den zweiten Kolben (24) in Richtung seiner die beiden Kammern verbindende Stellung beaufschlagt, und wobei zwischen der Auslassöffnung (21 b) und dem ersten Kolben (23) eine den ersten Kolben (23) in Richtung zu der Einlassöffnung (21 a) beaufschlagende weitere Druckfeder (27) vorgesehen ist.

## Claims

1. A piston arrangement, in particular for metering valves, through-flow sensors or hydraulic motors, with a housing (4, 22), in which at least one cylindrical hollow space is formed, in which a first piston (8, 23) which has a cylindrical hollow space at least in a region is mounted in a sealed and displaceable manner, and with a second piston (7, 24) which is mounted displaceably in the cylindrical hollow space of the first piston (8, 23), wherein in the first piston (8, 23) a valve seat is formed, against which the second piston (7, 24) is able to be placed with a sealing face such that the second piston (7, 24) is displaceable in the first piston (8, 23) between a position releasing a flow passage through the first piston (8, 23) and a position shutting off a flow passage through the first piston (8, 23), **characterized in that** an elastic element, in particular a compression spring or a laminated disc spring (6, 25), is associated with the second piston (7, 24) such that the second piston (7, 24) is acted upon into its position releasing a flow passage through the first piston (8, 23).

2. The piston arrangement according to Claim 1, **characterized in that** the valve seat and the sealing face are configured so as to be conical.

3. The piston arrangement according to one of Claims 1 to 2, **characterized in that** the second piston (7, 24) has at least partially a cylindrical outer surface, the diameter of which corresponds approximately to the internal diameter of the cylindrical hollow space of the first piston (8, 23) and on which helical grooves are provided.

4. A metering valve with a piston arrangement according to one of Claims 1 to 3, **characterized in that** the first piston (8) as injector piston defines two chambers (14, 15) in the housing (4), which are able to be brought into flow connection with each other by displacement of the second piston (7), wherein the face of the first and second piston (7, 8) facing the first chamber (14) is smaller than the face of the first piston (8) facing the second chamber (15) and, if applicable, of elements (2, 5) connected therewith.

5. The metering valve according to Claim 4, **characterized in that** the housing (4) forms an injector body, able to be connected with a distributor strip (9), in which is a first opening for connection of the first chamber (14) with a feed line in the distributor strip (9) and having an outlet opening, able to be closed in particular by an overflow valve (13), which outlet opening in turn is connected with a connection (12) provided in the distributor strip (9).

6. The metering valve according to Claim 4 or 5, **characterized in that** an injector locking screw (3) is screwed into the housing (4) on the side of the second chamber (15), into which a regulating screw (1) is screwed in, in which, if applicable, an indicating pin (2) is displaceably guided, which is connected with the first piston (8).

7. The metering valve according to one of Claims 4 to 6, **characterized in that** the second chamber (15) is able to be connected with the environment of the housing (4) via an opening which is able to be sealed by means of a locking screw (11).

8. The metering valve according to one of Claims 4 to 7, **characterized in that** the first and the second chamber (14, 15) are sealed with respect to each other by the first piston (8), and that in the sealing region of the first piston (8) an opening is provided in the housing (4), which is in flow connection with the outlet opening or with the environment of the housing (4).

9. A through-flow sensor with a piston arrangement according to one of Claims 1 to 3, **characterized in that** the housing (22) for connection in a fluid line has an inlet opening (21a) and an outlet opening (21b), between which the first piston (23) is arranged, wherein between the inlet opening (21a) and the first piston (23) a first chamber is formed and between the outlet opening (21b) and the first piston (23) a second chamber is formed, which are connected with each other or separated from each other depending on the position of the second piston (24) in the first piston (23).

10. The through-flow sensor according to Claim 9, **characterized in that** there is associated with the second piston (24) a compression spring (25), resting on the first piston (23) or on a component (26) connected therewith, which acts upon the second piston (24) in the direction of its position connecting the two chambers.

11. The through-flow sensor according to Claim 9 or 10, **characterized in that** between the outlet opening (21b) and the first piston (23), a further compression spring (27) is provided, acting upon the first piston (23) in the direction of the inlet opening (21a).

12. The through-flow sensor according to one of Claims 9 to 11, **characterized in that** on or in the first piston (23) a magnet, in particular a ring magnet (26), is provided, and that on or in the housing (22) a sensor (28), in particular a Hall sensor, is provided to detect the position and/or movement of the magnet (26).

13. A hydraulic motor with a piston arrangement according to one of Claims 1 to 3, wherein the housing (22) for connection in a fluid line has an inlet opening (21a) and an outlet opening (21b), between which the first piston (23) is arranged, wherein between the inlet opening (21a) and the first piston (23) a first chamber is formed and between the outlet opening (21b) and the first piston (23) a second chamber is formed, which are connected with each other or separated from each other depending on the position of the second piston (24) in the first piston (23), wherein there is associated with the second piston (24) a compression spring (25), resting on the first piston (23) or on a component (26) connected therewith, which acts upon the second piston (24) in the direction of its position connecting the two chambers, and wherein between the outlet opening (21b) and the first piston (23) a further compression spring (27) is provided, acting upon the first piston (23) in the direction of the inlet opening (21a).

## Revendications

1. Agencement de pistons, en particulier pour des soupapes de dosage, des capteurs de débit ou des moteurs hydrauliques, dotés d'un carter (4, 22), dans lequel est formée au moins une cavité cylindrique, dans laquelle un premier piston (8, 23) est monté de façon étanchéifiée et coulissante, qui présente au moins par endroits une cavité cylindrique, et d'un second piston (7, 24), qui est logé de façon coulissante dans la cavité cylindrique du premier piston (8, 23), un siège de soupape étant réalisé dans le premier piston (8, 23), siège contre lequel le second piston (7, 24) peut être appliqué avec une surface d'étanchéité de telle sorte que le second piston (7, 24) peut coulisser dans le premier piston (8, 23) entre une position libérant un passage d'écoulement à travers le premier piston (8, 23) et une position bloquant un passage d'écoulement dans le premier piston (8, 23), **caractérisé en ce qu'**un élément élastique, en particulier un ressort de pression ou un ensemble de ressort à disque (6, 25) est attribué au second piston (7, 24) de telle sorte que le second piston (7, 24) est sollicité dans sa position libérante un passage d'écoulement dans le premier piston (8, 23).

2. Agencement de pistons selon la revendication 1, **caractérisé en ce que** le siège de soupape et la surface d'étanchéité sont conçus dans une forme conique.

3. Agencement de pistons selon l'une quelconque des revendications 1 à 2, **caractérisé en ce que** le second piston (7, 24) présente au moins par endroits une surface extérieure cylindrique, dont le diamètre correspond à peu près au diamètre intérieur, de la cavité cylindrique du premier piston (8, 23) et sur laquelle des rainures de forme héliocoïdale sont prévues.

4. Soupape de dosage dotée d'un agencement de pistons selon l'une quelconque des revendications 1 à 3, **caractérisée en ce que** le premier piston (8) en tant que piston injecteur définit dans le carter (4) deux chambres (14, 15) qui peuvent être amenées en liaison d'écoulement l'une avec l'autre par déplacement du second piston (7), la surface, tournée vers la première chambre (14), du premier et du second pistons (7, 8) étant inférieure à la surface, tournée vers la seconde chambre (15), du premier piston (8) et d'éléments (2, 5) éventuellement reliés à ce piston.

5. Soupape de dosage selon la revendication 4, **caractérisée en ce que** le carter (4) forme un corps injecteur pouvant être relié à une réglette de distribution (9), dans lequel il présente une première ouverture pour la liaison de la première chambre (14) avec une arrivée dans la réglette de distribution (9) et une ouverture de sortie pouvant être fermée en particulier par une soupape de trop-plein (13), laquelle ouverture est reliée à son tour à un raccordement (12) prévu dans la réglette de distribution (9).

6. Soupape de dosage selon la revendication 4 ou 5, **caractérisée en ce qu'**une vis de fermeture d'injecteur (3) est vissée dans le carter (4) sur le côté de la seconde chambre (15), vis dans laquelle est vissée une vis de régulation (1), dans laquelle éventuellement une pointe d'affichage reliée au premier piston (8) est guidée de façon coulissante.

7. Soupape de dosage selon l'une quelconque des revendications 4 à 6, **caractérisée en ce que** la seconde chambre (15) peut être reliée par une ouverture pouvant être étanchéifiée au moyen d'une vis de fermeture (11) à l'environnement du carter (4).

8. Soupape de dosage selon l'une quelconque des revendications 4 à 7, **caractérisée en ce que** la première et la seconde chambres (14, 15) sont étanchéifiées l'une par rapport à l'autre au moyen du premier piston (8) et **en ce qu'**il est prévu dans la zone d'étanchéité du premier piston (8) une ouverture dans le carter (4) qui est en liaison d'écoulement avec l'ouverture de sortie ou avec l'environnement du carter (4).

9. Capteur de débit doté d'un agencement de pistons selon l'une quelconque des revendications 1 à 3, **caractérisé en ce que** le carter (22) présente pour le raccordement dans une conduite de fluide une ouverture d'entrée (21a) et une ouverture de sortie (21b), entre lesquelles le premier piston (23) est disposé, une première chambre étant formée entre l'ouverture d'entrée (21a) et le premier piston (23) et une seconde chambre entre l'ouverture de sortie (21b) et le premier piston (23), lesquelles sont en liaison l'une avec l'autre ou sont séparées l'une de l'autre en fonction de la position du second piston (24) dans le premier piston (23).

10. Capteur de débit selon la revendication 9, **caractérisé en ce qu'**un ressort de pression (25) s'appuyant sur le premier piston (23) ou un composant (26) relié à ce piston est associé au second piston (24), lequel ressort sollicite le second piston (24) en direction de sa position reliant les deux chambres.

11. Capteur de débit selon la revendication 9 ou 10, **caractérisé en ce qu'**un autre ressort de pression (27) sollicitant le premier piston (23) en direction de l'ouverture d'entrée (21a) est prévu entre l'ouverture de sortie (21b) et le premier piston (23).

12. Capteur de débit selon l'une quelconque des revendications 9 à 11, **caractérisé en ce qu'**un aimant, en particulier un aimant annulaire (26), est prévu sur ou dans le premier piston (23) et **en ce qu'**un capteur (28), en particulier un capteur de Hall, est prévu sur ou dans le carter (22) pour l'enregistrement de la position et/ou du déplacement de l'aimant (26).

13. Moteur hydraulique doté d'un agencement de pistons selon l'une quelconque des revendications 1 à 3, le carter (22) présentant pour le raccordement dans une conduite de fluide une ouverture d'entrée (21a) et une ouverture de sortie (21b), entre lesquelles le premier piston (23) est disposé, une première chambre étant formée entre l'ouverture d'entrée (21a) et le premier piston (23) et une seconde chambre entre l'ouverture de sortie (21b) et le premier piston (23), lesquelles chambres sont en liaison l'une avec l'autre ou séparées l'une de l'autre en fonction de la position du second piston (24) dans le premier piston (23), un ressort de pression (25) s'appuyant sur le premier piston (23) ou un composant (26) relié à ce piston étant attribué au second piston (24), lequel ressort sollicite le second piston (24) en direction de sa position reliant les deux chambres, et un autre ressort de pression (27) sollicitant le premier piston (23) en direction de l'ouverture d'entrée (21a) étant prévu entre l'ouverture de sortie (21b) et le premier piston (23).
